# EUROPEAN PATENT SPECIFICATION

(11) **EP 2 713 152 B1**
(45) Date of publication and mention of the grant of the patent: **12.08.2015**
(21) Application number: 13186000.9
(22) Date of filing: 25.09.2013
(51) Int. Cl.: G01M 17/007, B60S 9/02, B66C 23/78

(54) **Test bench for stabilizer devices on heavy vehicles**
Prüfstand für Stützauslegern für Kraftfahrzeugen
Banc de probe pour des dispositifs de stabilisation pour véhicules poids lourdes

(30) Priority: 26.09.2012 IT MI20121609
(43) Date of publication of application: 02.04.2014
(73) Proprietor: Cifa S.P.A., 20030 Senago, Milano (IT)
(72) Inventor: Cortellini, Mauro Marco, 20089 Rozzano (MI) (IT); Mantineo, Massimo, 20023 Cerro Maggiore (MI) (IT); Resta, Ferruccio, 20123 Milano (IT); Ripamonti, Francesco, 22036 Erba (CO) (IT); Tosi, Alessandro, 20146 Milano (IT)
(74) Representative: Petraz, Gilberto Luigi

(56) References cited:
- CN-U- 202 092 856

## Description

### FIELD OF THE INVENTION

The present invention concerns a test bench used to carry out static and fatigue tests on stabilizer devices able to be mounted on heavy work vehicles such as for example trucks provided with a concrete mixer, or pump for concrete, or truck crane, or other equipment for the building trade in general.

In particular the test bench according to the present invention is able to reproduce real conditions of load and constraint on the stabilizer device, so as to ensure the stability of the vehicle on which it will be mounted, during the work steps.

### BACKGROUND OF THE INVENTION

Heavy work vehicles are known, such as those used in the building trade for example, which normally consist of a truck on which one or more pieces of building equipment are installed, such as for example concrete mixers, pumps for casting concrete, truck cranes or other similar or comparable equipment.

The truck usually comprises a stabilizer device formed by a frame on which a plurality of stabilizer arms are pivoted, around a substantially vertical axis, and angularly distanced so as to cover the circumference around the axis. The stabilizer arms can be the telescopic type, that is, extendable, or the fixed type, that is, non extendable.

The stabilizer arms can be rotated from an inactive position, in which they allow the heavy vehicle to move on the road, to a work position, in which they are disposed in a radial pattern and contact the ground, or the road surface, in order to keep the heavy vehicle stable during the operating or work steps of its building equipment mounted thereon.

In particular, in the case of truck pumps or truck cranes, it is known that the extension of the arm that delivers the concrete, or the raising of the arm of the crane, determine a modification to the barycenter of the vehicle, with the risk of overturning the vehicle if the stabilizer arms are not extended and disposed to support the vehicle from outside.

These stabilizer devices, during their life cycle and under normal operating conditions, are therefore subject to a vertical load, mainly ascribable to the weight of the structure mounted on the frame, and to an overturning moment, connected to the fact that the barycenter of the structure, during the work phases, is normally off axis.

The distribution of this vertical load determines great stress in correspondence to the points where the stabilizer arms are pivoted to the frame which, if the stabilizer device is undersized, causes its parts to yield and/or break, with consequent increased risks for the safety of the operators, risks of damage to the work being constructed, long interruptions in the work steps, as well as costs for repairs or replacement.

It is therefore important to be able to carry out reliable tests to verify the resistance of the stabilizer device under load, so as to be able to correctly size the components during the design and execution steps, as well as to verify the reliability of the materials and the production procedures.

Document CN 202092856 U describes a test bench for crane frames, in which the upended frame is attached to a central structure, and four actuators apply forces on four removable elements of the crane.

One purpose of the present invention is to make a test bench for stabilizer devices of heavy work vehicles which is able to reproduce the real load and constraint conditions on said stabilizer device.

Another purpose of the present invention is to make a test bench where fatigue tests can be carried out, reproducing variable stress conditions, so as to size the arms in such a manner as to prevent breakage, during use, of parts of the stabilizer device and to prevent the heavy work vehicle on which the stabilizer device is mounted from overturning.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a test bench according to the present invention, which overcomes the limitations of the state of the art and eliminates the defects therein, is used to carry out static and fatigue tests on stabilizer devices able to be mounted on heavy work vehicles such as, for example, trucks provided with a concrete mixer, or pumps for concrete, or a truck crane or other equipment used in the building trade in general.

Known stabilizer devices, on which the test bench according to the invention can be used, comprise a substantially central frame from which a plurality of stabilizer arms extend, for example from three to eight, angularly distanced and disposed during use in a radial pattern around the median axis of the frame.

According to one feature of the present invention, the test bench comprises, as main elements, an oscillating element on which the frame of the device which is the object of the test is able to be mounted, with the corresponding stabilizer arms located on the ground, at least three support arms angularly distanced with respect to each other and radially connected to the oscillating element, and at least an actuator associated to each of the support arms.

The angular distance between the support arms is normally 120°, in the case of three arms, so as to uniformly distribute the loads and the stresses of the frame which is the object of the test; however, this distance can also be different, for example in order to adapt to different sizes and possibly to different shapes of the frame. In one solution of the invention, the angular distance between the arms can be adjusted by the operator before starting the test operation.

Each of the actuators can be selectively activated so as to reproduce real load and/or constraint conditions on the stabilizer device disposed in a work position.

In particular, each actuator is configured to generate axial thrusts, which, overall, reproduce the loads to which the vehicle is subjected when, for example, an arm for delivering the concrete is completely extended on one side of the vehicle, or when an arm of a crane has to horizontally remove a heavy load.

In this way, the test bench allows to verify, in particular, the static resistance of a stabilizer device, or the resistance to fatigue, preventing the breakage of its parts and the inclination or the overturning of the heavy work vehicle on which the device is installed, during the work step.

In a preferred solution, each of the actuators can reproduce a vertical load and the projections of an overturning moment around two axes orthogonal with respect to each other.

According to another feature of the present invention, each of the actuators is disposed below each of the support arms and cooperates at the upper part with a clamping device able to clamp the actuator to the support arm itself.

According to another feature of the present invention, each of the actuators is mounted on an anchoring structure located on the ground.

According to another feature of the present invention, the anchoring structure and the attachment device are selectively mobile parallel to a longitudinal axis which defines the main dimension of the corresponding support arm.

Therefore it is possible to adjust the position of each actuator with respect to the center of the oscillating element, always moving along the corresponding support arm. In particular, each actuator can be disposed along the corresponding support arm at a different distance with respect to the actuators associated to the other support arms.

In this way, it is possible to reproduce variable load conditions around the stabilizer device being tested.

According to another feature of the present invention, the test bench comprises a control and command unit connected to each of the actuators.

Thanks to the control and command unit, it is possible to synchronize the actions of the actuators in order to obtain the vertical load and the projections of the overturning moment on the stabilizer device being tested.

According to another feature of the present invention, the test bench comprises an interface element able to transfer the loads from the test bench to the frame.

Moreover, the interface element is able to compensate possible differences in height between the frame and the lower plane of the oscillating element.

According to another feature of the present invention, the test bench comprises additional elements, for example auxiliary support arms for weights and/or counterweights, cylinders or other type of actuator, able to simulate further loads, either the static type or the dynamic type.

Therefore, the test bench according to the present invention is configured to vary the disposition and the entity of the loads which affect the frame depending on different work conditions.

### BRIEF DESCRIPTION OF THE DRAWINGS

These and other characteristics of the present invention will become apparent from the following description of one form of embodiment, given as a non-restrictive example with reference to the attached drawings wherein:
- fig. 1 is a perspective view of a test bench according to the present invention associated to a stabilizer device of a heavy work vehicle;
- fig. 2 is a perspective view of the test bench in fig. 1;
- fig. 3 is a lateral view of fig. 1;
- fig. 4 is another lateral view of fig. 1;
- fig. 5 is a plan view of fig. 1;
- fig 6 is an enlarged detail of fig. 1;
- fig. 7 is an enlarged detail of fig. 3.

### DETAILED DESCRIPTION OF ONE FORM OF EMBODIMENT

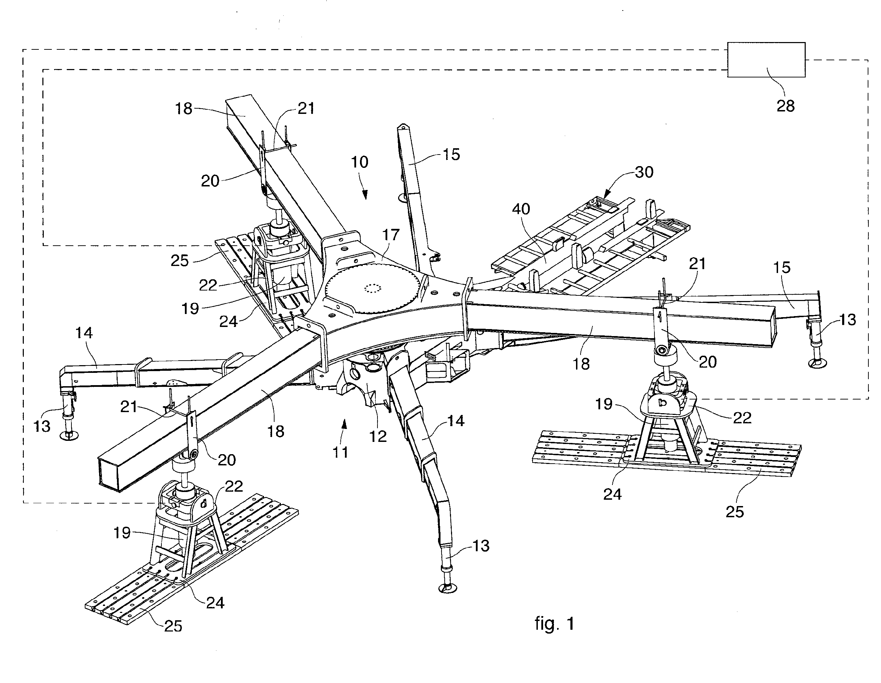

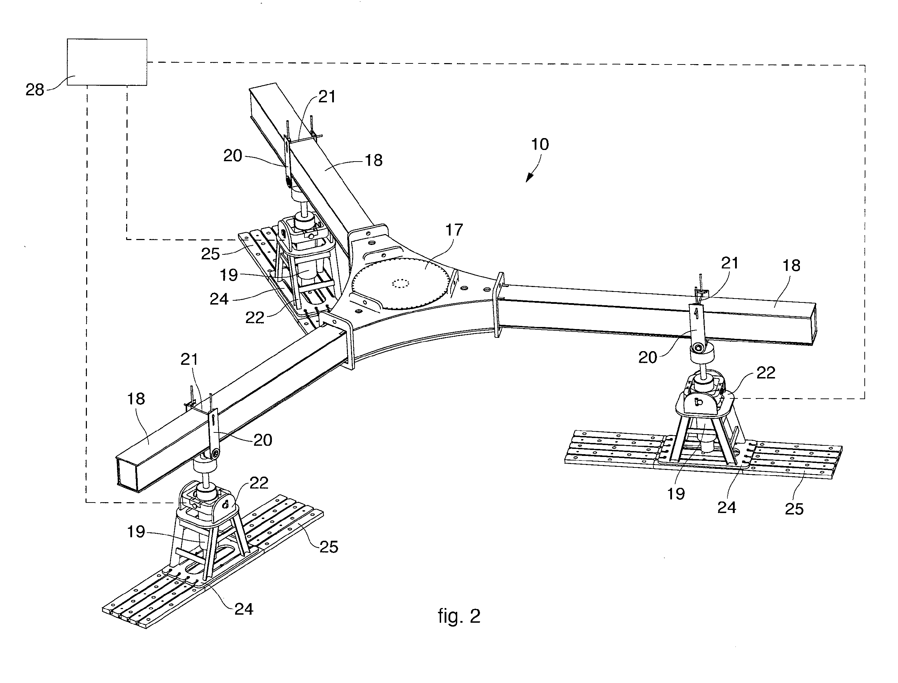

With reference to figs. 1 and 2, a test bench 10 according to the present invention is able to be used to carry out static and fatigue tests on a stabilizer device 11 disposed so as to simulate a work position and intended to be mounted on a heavy work vehicle, not shown in the drawings, such as for example a truck provided with a concrete mixer, or a pump for concrete or a truck crane, or other equipment for the building trade in general.

The stabilizer device 11, in fig. 1 disposed so as to simulate a work position, comprises a frame 12 on which, in the case shown by way of example, two telescopic stabilizer arms 14 and two extended stabilizer arms 15 are pivoted.

At the end of each stabilizer arm 14 and 15 there is a support foot 13 which allows the stabilizer device 11 to rest on the ground.

Normally, in a heavy work vehicle, the telescopic stabilizer arms 14 are disposed in the front part of the vehicle, while the extended stabilizer arms 15 are disposed in the back part.

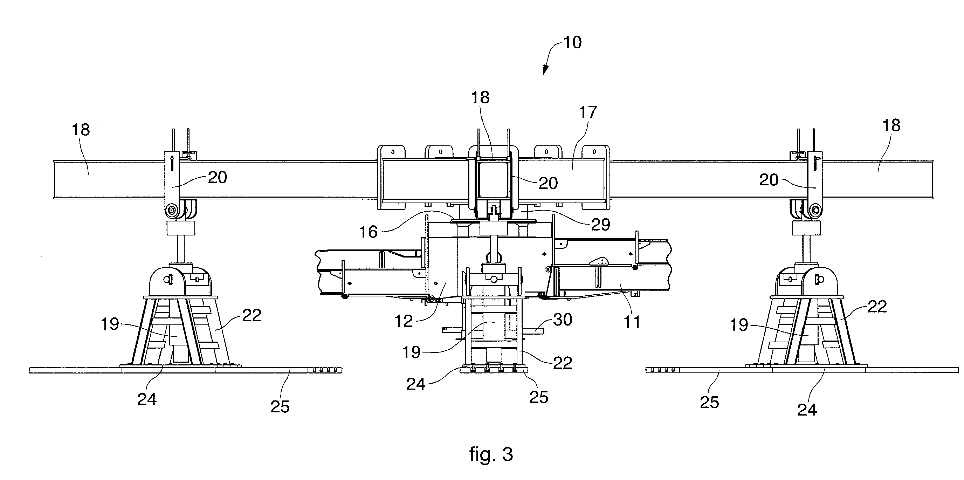

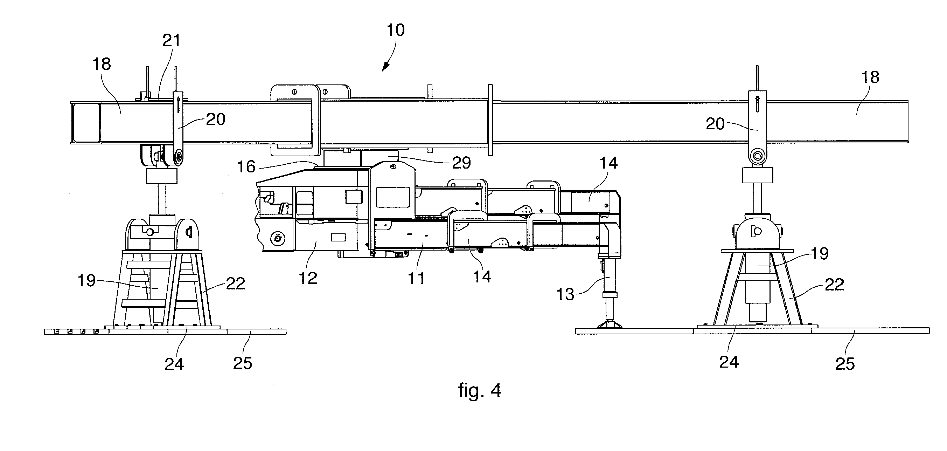

The frame 12 also comprises a rotating bearing 16 (figs. 3 and 4), disposed on its upper part and only partly visible in the drawings, able to allow the possible elements connected thereto to rotate around a vertical axis.

The test bench 10 comprises an oscillating element, in this case an oscillating crossbar 17 to which three support arms 18 are connected, in this case angularly equidistant at 120° from each other and disposed radially with respect to the oscillating crossbar 17 and disposed substantially on a single plane, which in this case is horizontal.

As we said, the angle between the support arms 18 could be different, in the case of particular sizes and shapes of the frame, and the support arms 18 could be associated to means to adjust the angular distance in order to adapt, when the test is being prepared, to the particular frame to be tested.

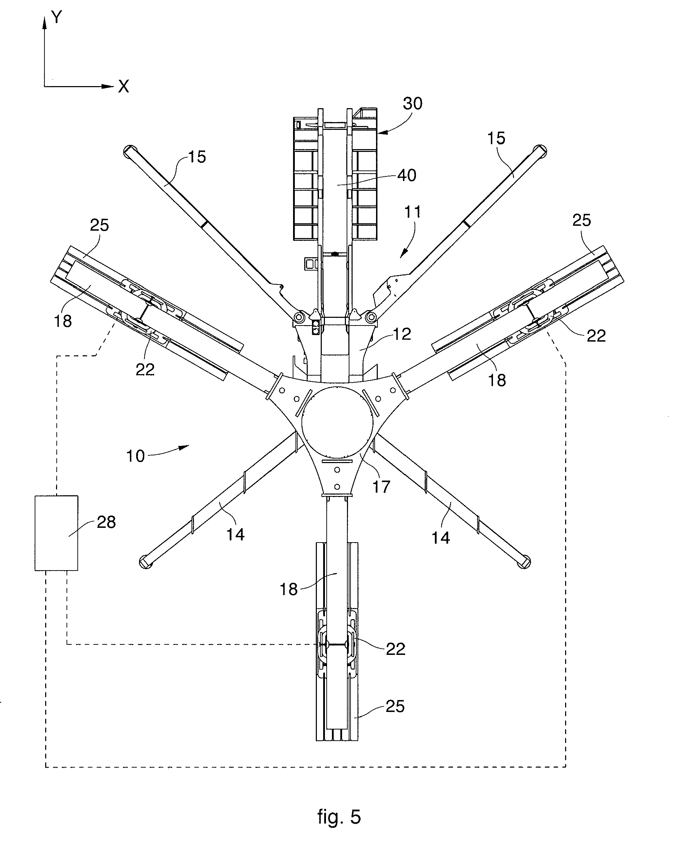

During use, the test bench 10 defines an axis X and an axis Y (fig. 5) which are orthogonal to each other, both lying on a horizontal plane parallel to the ground on which the test bench 10 is resting.

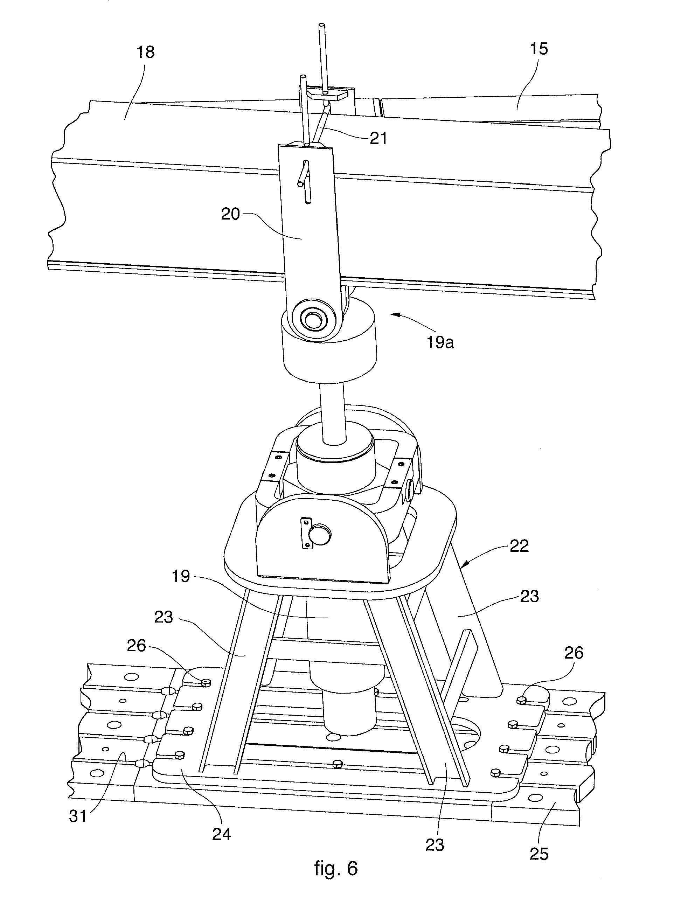

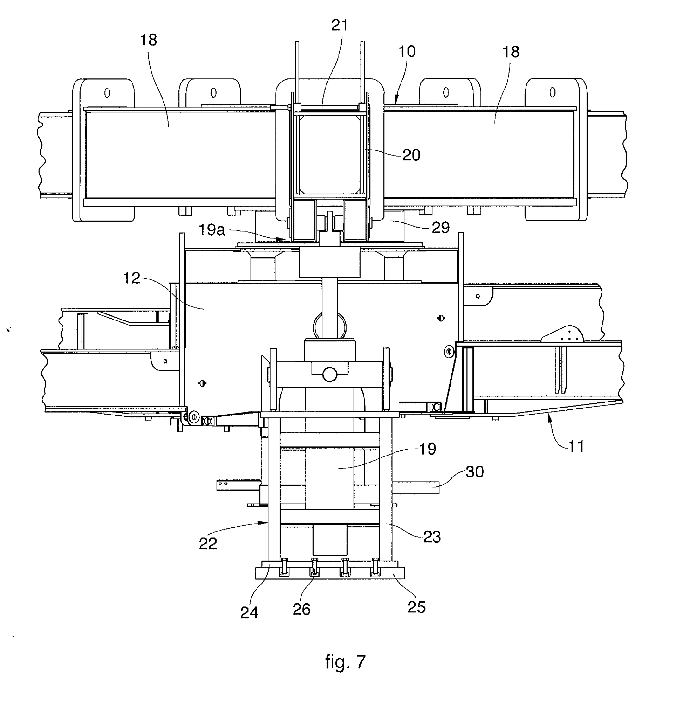

Each support arm 18, in this case with a square section and hollow inside, cooperates with an actuator 19 (figs. 6 and 7), of the hydraulic type for example, the oil-dynamic type or any other known type and suitable for use, disposed substantially vertical at a determinate distance from the center of the oscillating crossbar 17 and able to be selectively driven, and with an adjustable force of application, in order to simulate the load and constraint conditions on the stabilizer device 11.

In particular, the three actuators 19 are driven and adjusted in order to reproduce variable conditions of vertical load on the frame 12, an overturning moment around the axis X and an overturning moment around the axis Y. The choice of reproducing the two overturning moments separately is due to the fact that the overturning moment can be oriented through the frame 12.

In this case, the forces transmitted by each actuator 19 can be in the order of 500 kN, while the maximum travels can be equal to 1500 mm.

The distances of each actuator 19 from the center of the oscillating crossbar 17 are selectively modifiable on the basis of the type and the entity of the loads to be simulated.

In fact, each actuator 19 is attached to the corresponding support arm 18 by means of a spherical articulation joint 19a (fig. 6), which transmits the load generated by the actuator 19 to the support arm 18, to the oscillating crossbar 17 and finally to the stabilizer device 11. The actuator 19 is therefore selectively positionable along the support arm 18 and can be clamped to the support arm 18 by means of a clamping device 20, comprising a stop 21 disposed orthogonal to the longitudinal development of the support arm 18.

Each actuator 19 is mounted on an anchoring structure 22 comprising a plurality of legs 23 attached to a base 24 able to be attached to an attachment plate 25 using, for example, threaded connection means, in this case screws 26. The attachment plate 25, in this case of an elongated shape, comprises a plurality of guides 31 so as to adjust the position of the actuator 19 along each support arm 18.

In particular, the position of the actuators 19 can be adjusted depending on the real distances of a determinate work station, in order to reproduce the exact stresses thereof.

The three actuators 19 are controlled and commanded by a central control and command unit 28, shown only schematized in figs. 1, 2 and 5, so that they can be driven, in an adjustable way, in order to reproduce the real loads on the frame 12 in the desired manner.

By suitably synchronizing the actions of the three actuators 19, it is possible to reproduce the vertical load and the projections of the overturning moment along the axes X and Y.

The test bench 10 comprises an interface flange 29 (fig. 7) able to be interposed between the frame 12 and the lower part of the oscillating crossbar 17.

The interface flange 29 has the double function of transmitting the test loads from the oscillating crossbar 17 to the frame 12 and to compensate possible differences in height between the frame 12 and the lower plane of the oscillating crossbar 17.

In this case, the frame 12 also comprises an auxiliary arm 40 (figs. 1 and 5) on which additional masses 30 can be attached, able to reproduce the distribution of the loads of the real machine. The additional masses can represent, for example, the mass of the heavy work vehicle suspended from the frame 12. In a variant solution, alternative or additional to the preceding one, additional loads can be simulated by means of an actuator, such as a cylinder of the hydraulic type, for example oil dynamic, pneumatic or electric type, or any other type suitable to the purpose.

According to a variant, the auxiliary arm 40, on which the additional masses 30 can be attached, can be attached directly to the test bench 10.

According to a variant, the test bench 10 also comprises at least an additional actuator, not shown, disposed on a horizontal plane. These additional actuators can be also attached to the support arm 18, at a similar distance to that at which the actuators 19 are attached. In this case, the additional actuators act in a perpendicular direction with respect to the corresponding support arm 18, simulating further stresses to which the frame 12 can be subjected.

It is clear that modifications and/or additions of parts may be made to the test bench 10 as described heretofore, without departing from the field and scope of the present invention.

It is also clear that, although the present invention has been described with reference to some specific examples, a person of skill in the art shall certainly be able to achieve many other equivalent forms of test bench, having the characteristics as set forth in the claims and hence all coming within the field of protection defined thereby.

## Claims

1. Test bench for testing a stabilizer device (11) intended to be mounted on heavy work vehicles such as trucks provided with a concrete mixer, or pump for concrete, or truck crane, or other equipment for the building trade, said stabilizer device (11) having at least a frame (12) to which stabilizer arms (14, 15) are connected, angularly distanced, said test bench comprising an oscillating element (17) on which said frame (12) is able to be mounted with the corresponding stabilizer arms (14, 15) located on the ground, and an interface flange (29) configured to be interposed between the frame (12) and the lower part of said oscillating element (17), **characterised in that** the test bench is further comprising at least three support arms (18) connected to said oscillating element (17), angularly distanced from each other and disposed radially with respect to it, and at least one actuator (19) associated to each of said support arms (18) and able to be selectively activated so as to reproduce real conditions of load and/or constraint on said stabilizer device (11) and on said stabilizer arms (14, 15) disposed in a work position.

2. Test bench as in claim 1, **characterized in that** each of said actuators (19) is disposed below each of said support arms (18) and cooperates at the upper part with a clamping device (20) able to clamp said actuator (19) to said support arm (18).

3. Test bench as in claim 1 or 2, **characterized in that** each of said actuators (19) is mounted on an anchoring structure (22) located on the ground.

4. Test bench as in claim 3, **characterized in that** said anchoring structure (22) and said clamping device (20) are selectively mobile parallel to a longitudinal axis of the corresponding support arm (18).

5. Test bench as in claim 1 or as in any claim from 2 to 4, **characterized in that** each of said actuators (19) is disposed substantially vertically.

6. Test bench as in claim 1 or as in any claim from 2 to 5, **characterized in that** it also comprises at least another actuator disposed horizontally.

7. Test bench as in claim 1 or as in any claim from 2 to 6, **characterized in that** it comprises a control and command unit (28) connected to each of said actuators (19).

8. Test bench as in claim 7, **characterized in that** said control and command unit (28) comprises at least means to synchronize the drive of said actuators (19) with respect to each other.

9. Test bench as in claim 1 or as in any claim from 2 to 7, **characterized in that**, said interface element (29) is able to transfer the loads from said oscillating element (17) to said frame (12).

10. Test bench as in claim 1 or as in any claim from 2 to 9, **characterized in that** it comprises at least an auxiliary arm (40) to support additional masses (30) able to simulate other loads applied to the frame (12).

11. Test bench as in claim 1 or as in any claim from 2 to 10, **characterized in that** it comprises at least a hydraulic, pneumatic, electric or other suitable type of actuator, able to simulate the presence of other loads applied to the frame (12).

## Patentansprüche

1. Prüfstand zum Testen eines Stützauslegers (11), der dazu vorgesehen ist, an einem Schwerlastkraftfahrzeug wie einem Lastkraftwagen angebracht zu werden, welcher mit
einem Betonmischer, oder einer Pumpe für Beton, oder einem LKW-Kran, oder anderer Ausrüstung für das Baugewerbe versehen ist,
wobei der Stützausleger (11) zumindest einen Rahmen (12) aufweist, welcher mit winkelig beabstandet Stützarmen (14, 15) verbunden ist,
wobei der Prüfstand
ein Oszillationselement (17), an welchem der Rahmen (12) geeignet ist, mit den zugehörigen Stützarmen (14, 15) auf dem Boden angeordnet, angebracht zu werden,
und einen Schnittstellenflansch (29), welcher konfiguriert ist, zwischen dem Rahmen (12) und dem unteren Teil des Oszillationselements (17) angeordnet zu werden,
aufweist,
**dadurch gekennzeichnet, dass**
der Prüfstand weiterhin aufweist
zumindest drei Tragearme (18), welche mit dem Oszillationselement (17) verbunden sind, wobei sie winkelig voneinander beabstandet und radial zu ihm angeordnet sind,
und an jedem der Tragearme (18) zumindest einen angegliederten Aktuator (19), welcher dazu geeignet ist, selektiv aktiviert zu werden, um reale Bedingungen von Belastung und/oder Dehnung auf den Stützausleger (11) und auf die Stützarme (14, 15), welche in einer Arbeitsposition angeordnet sind, nachzubilden.

2. Prüfstand gemäß Anspruch 1, **dadurch gekennzeichnet, dass** jeder der Aktuatoren (19) unterhalb jedem der Tragearme (18) angeordnet ist und an dem oberen Teil mit einer Klemmvorrichtung (20) zusammenwirkt, welche geeignet ist, den Aktuator (19) an den Tragarm (18) zu klemmen.

3. Prüfstand gemäß Anspruch 1 oder 2, **dadurch gekennzeichnet, dass** jeder der Aktuatoren (19) an einer Verankerungsstruktur (22) angebracht ist, welche sich auf dem Boden befindet.

4. Prüfstand gemäß Anspruch 3, **dadurch gekennzeichnet, dass** die Verankerungsstruktur (22) und der Klemmvorrichtung (20) parallel zu einer longitudinalen Achse des zugehörigen Tragarms (18) selektiv bewegbar sind.

5. Prüfstand gemäß Anspruch 1 oder einem der Ansprüche 2 bis 4, **dadurch gekennzeichnet, dass** jeder der Aktuatoren (19) im Wesentlichen vertikal angeordnet ist.

6. Prüfstand gemäß Anspruch 1 oder einem der Ansprüche 2 bis 5, **dadurch gekennzeichnet, dass** er weiterhin zumindest einen horizontal angeordneten weiteren Aktuator aufweist.

7. Prüfstand gemäß Anspruch 1 oder einem der Ansprüche 2 bis 6, **dadurch gekennzeichnet, dass** er eine Steuer- und Regeleinheit (28) aufweist, welche mit jedem der Aktuatoren (19) verbunden ist.

8. Prüfstand gemäß Anspruch 7, **dadurch gekennzeichnet, dass** die Steuer- und Regeleinheit (28) zumindest Mittel zum Synchronisieren des Antriebs der Aktuatoren (19) in Bezug zueinander aufweist.

9. Prüfstand gemäß Anspruch 1 oder einem der Ansprüche 2 bis 7, **dadurch gekennzeichnet, dass** das Schnittstellenelement (29) geeignet ist, die Belastungen von dem Oszillationselement (17) zu dem Rahmen (12) zu transferieren.

10. Prüfstand gemäß Anspruch 1 oder einem der Ansprüche 2 bis 9, **dadurch gekennzeichnet, dass** er zumindest einen Hilfsarm (40) zum Tragen zusätzlicher Massen (30) zum Simulieren anderer auf den Rahmen (12) einwirkender Lasten aufweist.

11. Prüfstand gemäß Anspruch 1 oder einem der Ansprüche 2 bis 10, **dadurch gekennzeichnet, dass** er zumindest einen hydraulischen, pneumatischen, elektrischen oder anderweitig geeigneten Aktuator aufweist, welcher geeignet ist, das Vorliegen anderer auf den Rahmen (12) einwirkender Belastungen zu simulieren.

## Revendications

1. Banc d'essai pour soumettre à essai un dispositif stabilisateur (11) destiné à être monté sur des véhicules de travaux lourds tels que des camions munis d'une bétonnière ou d'une pompe à béton ou d'une grue sur camion ou d'un autre équipement pour le métier du bâtiment, ledit dispositif stabilisateur (11) ayant au moins un châssis (12) auquel sont reliés des bras stabilisateurs (14, 15), angulairement écartés, ledit banc d'essai comportant un élément oscillant (17) sur lequel ledit châssis (12) peut être monté avec les bras stabilisateurs correspondants (14, 15) positionnés sur le sol, et une bride d'interface (29) configurée pour être intercalée entre le châssis (12) et la partie inférieure dudit élément oscillant (17), **caractérisé en ce que** le banc d'essai comporte en outre au moins trois bras de support (18) reliés audit élément oscillant (17), angulairement espacés les uns des autres et disposés radialement par rapport à celui-ci, et au moins un actionneur (19) associé à chacun desdits bras de support (18) et pouvant être activé sélectivement de manière à reproduire des conditions réelles de charge et/ou de contrainte sur ledit dispositif stabilisateur (11) et sur lesdits bras stabilisateurs (14, 15) disposés dans une position de travail.

2. Banc d'essai selon la revendication 1, **caractérisé en ce que** chacun desdits actionneurs (19) est disposé sous chacun desdits bras de support (18) et coopère, au niveau de la partie supérieure, avec un dispositif de serrage (20) pouvant serrer ledit actionneur (19) sur ledit bras de support (18).

3. Banc d'essai selon la revendication 1 ou 2, **caractérisé en ce que** chacun desdits actionneurs (19) est monté sur une structure d'ancrage (22) positionnée sur le sol.

4. Banc d'essai selon la revendication 3, **caractérisé en ce que** ladite structure d'ancrage (22) et ledit dispositif de serrage (20) sont sélectivement mobiles parallèlement à un axe longitudinal du bras de support (18) correspondant.

5. Banc d'essai selon la revendication 1 ou selon l'une quelconque des revendications 2 à 4, **caractérisé en ce que** chacun desdits actionneurs (19) est disposé de manière sensiblement verticale.

6. Banc d'essai selon la revendication 1 ou selon l'une quelconque des revendications 2 à 5, **caractérisé en ce qu'**il comporte également au moins un autre actionneur disposé horizontalement.

7. Banc d'essai selon la revendication 1 ou selon l'une quelconque des revendications 2 à 6, **caractérisé en ce qu'**il comporte une unité de contrôle et de commande (28) reliée à chacun desdits actionneurs (19).

8. Banc d'essai selon la revendication 7, **caractérisé en ce que** ladite unité de contrôle et de commande (28) comporte au moins des moyens pour synchroniser l'entraînement desdits actionneurs (19) les uns par rapport aux autres.

9. Banc d'essai selon la revendication 1 ou selon l'une quelconque des revendications 2 à 7, **caractérisé en ce que** ladite bride d'interface (29) peut transférer les charges dudit élément oscillant (19) audit châssis (12).

10. Banc d'essai selon la revendication 1 ou selon l'une quelconque des revendications 2 à 9, **caractérisé en ce qu'**il comporte au moins un bras auxiliaire (40) pour supporter des masses supplémentaires (30) pouvant simuler d'autres charges appliquées au châssis (12).

11. Banc d'essai selon la revendication 1 ou selon l'une quelconque des revendications 2 à 10, **caractérisé en ce qu'**il comporte au moins un actionneur hydraulique, pneumatique, électrique ou d'un autre type, pouvant simuler la présence d'autres charges appliquées au châssis (12).
